**Europäisches Patentamt**

**European Patent Office**

**Office européen des brevets**

(11) Veröffentlichungsnummer: **0 044 967**
A2

# (12) EUROPÄISCHE PATENTANMELDUNG

(21) Anmeldenummer: **81105192.9**

(22) Anmeldetag: **04.07.81**

(51) Int. Cl.³: **G 05 B 19/23**

(30) Priorität: **24.07.80 CH 5657/80**

(43) Veröffentlichungstag der Anmeldung: **03.02.82**
**Patentblatt 82/5**

(84) Benannte Vertragsstaaten: **CH DE FR GB IT LI NL SE**

(71) Anmelder: **Maag-Zahnräder und -Maschinen Aktiengesellschaft, Hardstrasse 219, CH-8023 Zürich (CH)**

(72) Erfinder: **Blanc, Guy-François, Dipl.-Ing., Grosswiesenstrasse 102, CH-8051 Zürich (CH)**

(74) Vertreter: **Hotz, Klaus, Dipl.-El.-Ing. / ETH, c/o Maag-Zahnräder und Maschinen Aktiengesellschaft Hardstrasse 219, CH-8023 Zürich (CH)**

(54) **Lageregelverfahren und -system für einen Stellzylinderantrieb.**

(57) Das Lageregelverfahren und -system für einen Stellzylinderantrieb nehmen zur Kompensation der bleibenden Regelabweichung am Ausgang eines im Regelkreis für den Soll-Istwert-Vergleich vorgesehenen Subtrahierers (7) ein Signal entweder im Stillstand des Stellantriebs (1) oder während des Regelvorgangs, wenn das Subtrahiererausgangssignal durch null geht, ab, speichern es und führen dem Subtrahierer ein entsprechendes Korrektursignal zu. Da nur einmal ein diskreter Wert im Regelkreis abgenommen zu werden braucht, werden Stabilitäts- oder Unruheprobleme sicher vermieden, und die bleibende Regelabweichung läßt sich einfacher und genauer als bisher kompensieren.

ACTORUM AG

0044967

-1-

Lageregelverfahren und -system für einen Stellzylinderantrieb

Die Erfindung betrifft ein Lageregelverfahren und ein Lageregelsystem der im Oberbegriff der Patentansprüche 1 und
2 bzw. 4 und 5 angegebenen Art.

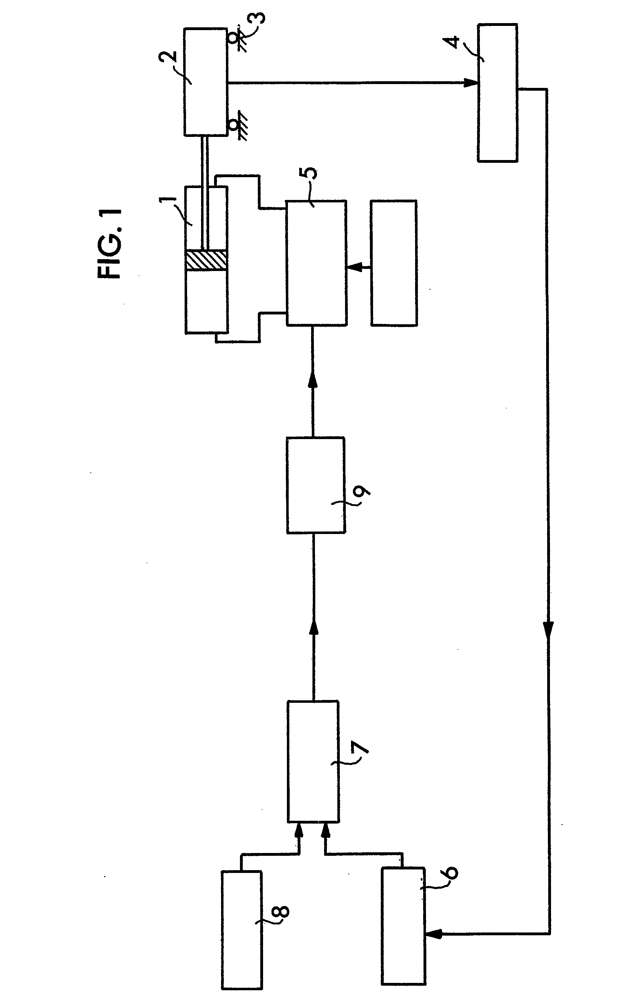

Ein solcher Stellzylinderantrieb besteht gemäss Fig. 1 aus
einem hydraulischen Stellzylinder, der mechanisch mit dem
zu positionierenden Schlitten (z.B. einem Werkstücktisch)
verbunden und über ein Servoventil gespeist wird. Die Lage
des Schlittens gegenüber dem feststehenden Teil einer Maschine wird mit einem hoch auflösenden Lagemessystem erfasst. Das Servoventil selbst wird durch ein elektrisches
Signal so gesteuert, dass der Schlitten in die gewünschte
Lage fährt und dort gehalten wird. Zu diesem Zweck ist ein
elektronisches Lageregelsystem vorgesehen, dessen Regler aus

- 2 -

einem Subtrahierer die aus Sollwert und Istwert gebildete Regelabweichung empfängt und eine entsprechende Stellgrösse an das Servoventil abgibt.

Aus Stabilitätsgründen sollte bei Regelstrecken der hier in Rede stehenden Art der Regler im wesentlichen nur P-, nicht aber I-Verhalten aufweisen. Es wird deshalb in einem solchen Lageregelsystem stets eine bleibende Regelabweichung vorhanden sein, die auf Nullpunktsverschiebungen der elektronischen Verstärker und der Stellglieder (hier insgesamt als Servoventil dargestellt), auf ungleiche Kolbenflächen in dem Stellzylinder, auf Leckage in dem Stellzylinder, usw., zurückzuführen sind. Die bleibende Regelabweichung drückt sich so aus, daß nach dem Soll-/Istwert-Vergleich und entsprechender Verstellung des Schlittens dieser zwar stillsteht, d.h. der Istwert nicht mehr variiert, trotzdem jedoch ein kleiner Lagefehler vorhanden ist, der durch die genannten Ungenauigkeiten in dem System hervorgerufen wird. Dieser Lagefehler entspricht einer Restspannung, welche am Ausgang des Subtrahierers beim Stillstand des Antriebs auftritt. Dieser Lagefehler, d.h. die bleibende Regelabweichung drückt sich so aus, daß die ideale Sollposition entweder nicht erreicht oder überfahren wird, was von dem Vorzeichen der algebraischen Summe der oben dargelegten Nullpunktsverschiebungen abhängig ist. Wenn eine sehr genaue Lageregelung erzielt werden soll, muß die Restspannung am Ausgang des Subtrahierers, der die Differenz zwischen Sollwert und Istwert bildet, beim Stillstand des Antriebs gleich null sein oder mindestens unter einem Wert liegen, welcher dem kleinsten Auflösungsschritt des Lagemeßsystems entspricht. Das ist aber bei einem Stellzylinderantrieb mit Servoventil besonders schwierig zu erreichen.

Zur Lösung dieses Problems wird bei einer aus der DE-OS 26 02 187 bekannten rechnergesteuerten Profilbearbeitungs-Werkzeugmaschine eine Korrektur für eine relativ langsame Servoventilnullpunktswanderung und Verschiebungen der Verstärkervorspannung erzeugt. Gemäss Fig. 4A dieser Druckschrift wird die Restspannung $e_1$ am Ausgang des Subtrahierers abgegriffen und in einem Integrierer-Inverter 98, der zu dem Regler parallel geschaltet ist, integriert und dann als Korrekturspannung $e_2$ einem Stromverstärker 92 aufgeschaltet, welcher vor dem Servoventil 84 angeordnet ist. Nachteilig ist bei dieser bekannten Lösung, dass die Korrektur nicht sofort wirksam werden kann, weil zur Vermeidung von Unstabilität die Integrationszeitkonstante relativ gross gewählt werden muss. Weiter haben der Integrierer und die ihm nachgeschalteten beiden Verstärker, welche insgesamt den Integrierer-Inverter 98 bilden, selbst Nullpunktsverschiebungen, die nicht korrigiert werden können. Ausserdem wird bei der bekannten Lösung ständig korrigiert, weil ständig die Spannung hinter dem Subtrahierer abgegriffen und integriert wird. Diese ständige Korrektur kann Unruhe im Antrieb hervorrufen, welche eine entsprechende Empfindlichkeitsabstimmung erforderlich macht, die nur zu einer Empfindlichkeitseinbusse des Regelsystems führen kann.

Aufgabe der Erfindung ist es, ein Lageregelverfahren und -system zu schaffen, bei denen die bleibende Regelabweichung auf einfachere und wesentlich genauere Weise kompensiert wird.

Diese Aufgabe wird durch die im Kennzeichen der beigefügten Patentansprüche 1 und 2 bzw. 4 und 5 angegebenen Merkmale gelöst.

Die Erfindung schafft somit einen neuen Weg für die Korrektur der bleibenden Regelabweichung, wobei entweder im Stillstand des Stellzylinderantriebs die Restspannung am Ausgang des Subtrahierers erfasst und gespeichert oder in dem Zeitpunkt, in welchem das Ausgangssignal des Subtrahierers null ist, die Differenz zwischen Sollwert und Istwert erfasst und gespeichert wird. Diese gespeicherten Werte können dann mit dem geeigneten Vorzeichen als Korrektursignal addiert werden. Während bei der ersten Variante der Erfindung der Stillstand entweder durch genügend langes Warten erreicht oder durch Istwertbeobachtung festgestellt und dann die Messung für einen Betriebspunkt durchgeführt wird, wird in der zweiten Variante der Erfindung während des Verfahrens des Schlittens in dem Zeitpunkt, in welchem das Ausgangssignal des Subtrahierers null wird, die Differenz zwischen Sollwert und Istwert, die laufend gebildet wird, gespeichert und dann als Korrektursignal eingespeist.

Die Ausgestaltung der Erfindung nach Anspruch 3 stellt sicher, daß der Schlitten die Stelle erreicht, an welcher das Ausgangssignal des Subtrahierers durch null geht. Bei dem Hilfssignal kann es sich um eine Hilfsspannung oder um einen Digitalhilfswert handeln, je nach dem, wie das Regelsystem ausgelegt ist.

Die erfindungsgemäße Lösung ermöglicht, das Korrektursignal genau zu bestimmen und zu speichern, was auch beliebig oft erfolgen kann. Das Korrektursignal kann nicht nur an einem bestimmten Punkt, sondern überall entlang der Schlittenverfahrstrecke gemessen werden. Während bei dem bekannten System die Schleife, in der das Korrektursignal gebildet wird, ständig arbeitet und nie einen festen Wert liefert, wird bei der erfindungsgemäßen Lösung nur einmal ein diskreter Wert im Regelkreis abgegriffen, gespeichert und als Korrektursignal auf den Eingang des Subtrahierers gegeben. Dadurch werden Stabilitäts- oder Unruheprobleme, wie sie bei dem bekannten System auftreten, vermieden. Weiter eignet sich die erfindungsgemäße Lösung speziell für die digitale Aufbereitung des Sollwerts und des Istwerts, sie ist aber grundsätzlich bei Analogsystemen mit Speichermöglichkeit einsetzbar.

Der Betrag des in dem erfindungsgemäßen System gebildeten Korrektursignals ist auch ein Maß für die gute Funktion
des Stellzylinderantriebs, so daß bei Überschreitung einer
gewissen Toleranz Alarm gegeben werden kann.

Zwei Ausführungsbeispiele der Erfindung werden im folgenden unter Bezugnahme auf die beigefügten Zeichnungen näher
beschrieben. Es zeigt

Fig. 1            ein grundsätzliches Beispiel für ein
                  Lageregelsystem, in welchem die
                  Erfindung anwendbar ist,

Fig. 2 und 3      Blockschaltbilder von zwei Ausführungsformen der Erfindung, in denen der
                  Übersichtlichkeit halber die Regel-
                  strecke und das Lagemeßsystem wegge-
                  lassen worden sind, und

Fig. 4            ein Erläuterungsdiagramm.

In Fig. 1 ist ein Stellantriebszylinder 1 mechanisch mit
einem Schlitten 2 verbunden, der auf einem feststehenden
Bett 3 verschiebbar gelagert ist. Der Schlitten 2 wird
gegenüber einem Lagemeßsystem 4 durch den Stellantriebszylinder 1 verfahren und positioniert. Zu diesem Zweck beaufschlagt ein Servoventil 5 die eine oder die andere Seite des in dem Stellantriebszylinder 1 enthaltenen Kolbens
entsprechend einer Stellgröße mit Drucköl. Das Lagemeßsystem gibt die Meßinformation, d.h. die Regelgröße an einen
Istwertbildner 6 ab, welcher mit einem Eingang eines Subtrahierers 7 verbunden ist. Ein weiterer Eingang des Subtrahierers 7 ist mit einem Sollwertbildner verbunden, welcher den Schlittenpositionssollwert liefert. Der Subtrahierer 7

- 6 -

bildet aus dem Sollwert und dem Istwert die Regelabweichung, die einem Regler 9 zugeführt wird, der daraus die
Stellgröße bildet und an das Servoventil 5 abgibt.

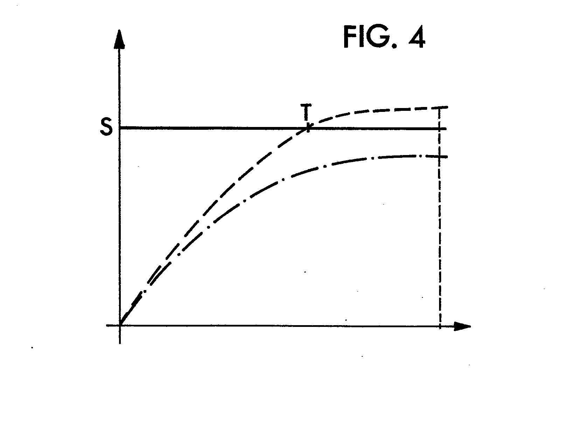

Wenn in dem Regelsystem keine Nullpunktsabweichungen vorhanden wären, würde der Schlitten, wenn er nach dem Regelvorgang wieder stillsteht, den in Fig. 4 mit S bezeichneten Lagewert haben und die Regelabweichung, d.h.
die Lagespannung am Ausgang des Subtrahierers wäre bei
Stillstand des Schlittens null. Aufgrund der Nullpunktsabweichungen der in dem System enthaltenen Glieder,an denen
das Servoventil 5 und der Stellantriebszylinder 1 den größten  Anteil haben, nimmt der Schlitten 2 aber, nachdem er
wieder zum Stillstand gekommen ist, eine Lage ein, die
einem in Fig. 4 oberhalb oder unterhalb des Sollwertes S
gelegenen Lagewert entspricht und auf der gestrichelten
bzw. strichpunktierten Kurve von dem Schlitten erreicht
wird.

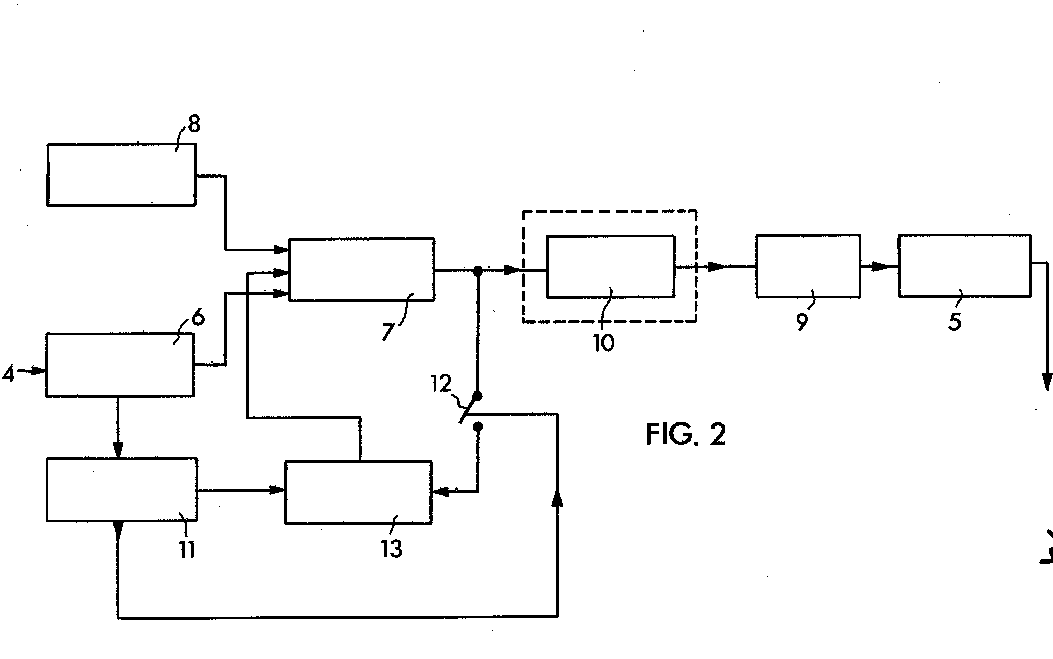

Fig. 2 zeigt wieder das Regelsystem von Fig. 1, wobei die
Regelstrecke 1, 2 und das Lagemeßsystem 4 der Übersichtlichkeit halber weggelassen worden sind. Zusätzlich zeigt
Fig. 2 einen wahlweise vorhandenen Digital/Analog-Wandler
10, der nur benutzt wird, wenn der dem Regler 9 vorgeschaltete Teil des Systems digital arbeitet, während der
Regler selbst analog arbeitet. Mit dem Istwertbildner 6
ist ein Stillstandsmelder 11 verbunden, der über einen Ausgang auf einen elektronischen Schalter 12 einwirkt, welcher zwischen dem Ausgang des Subtrahierers 7 und einem
Eingang eines Tastspeichers 13 liegt, von welchem ein weiterer Eingang mit dem Stillstandsmelder 11 verbunden ist.
Der Ausgang des Tastspeichers 13 ist mit einem dritten
Eingang des Subtrahierers 7 verbunden. Wenn der Stellantrieb nach Ausführung des Regelvorganges wieder zum Stillstand gekommen ist, schließt der Stillstandsmelder 11 kurzzeitig den Schalter 12, so daß die im Zeitpunkt des Stillstands am Ausgang des Subtrahierers 7 vorhandene Restspannung, die der bleibenden Regelabweichung entspricht, von dem Tastspeicher 13 erfaßt und gespeichert wird. Der Tastspeicher 13 gibt dann ein Korrektursignal an den Subtrahierer ab, was zur Folge hat, daß, nachdem Stillstand eingetreten ist, der Antrieb nochmal nachgestellt wird, d.h. der Schlitten 2 zu dem Sollagewert S verfahren wird. Diese Lage des Schlittens wird dann als Referenzpunkt benutzt und von da an wird bei jeder Schlittenverstellung die gleiche Korrektur vorgenommen. Bei dieser Ausführungsform der Erfindung wird ausreichend lange gewartet, bis der Stillstand erreicht ist, woraufhin dann der Stillstandsmelder die vorstehend beschriebene Funktion einleitet.

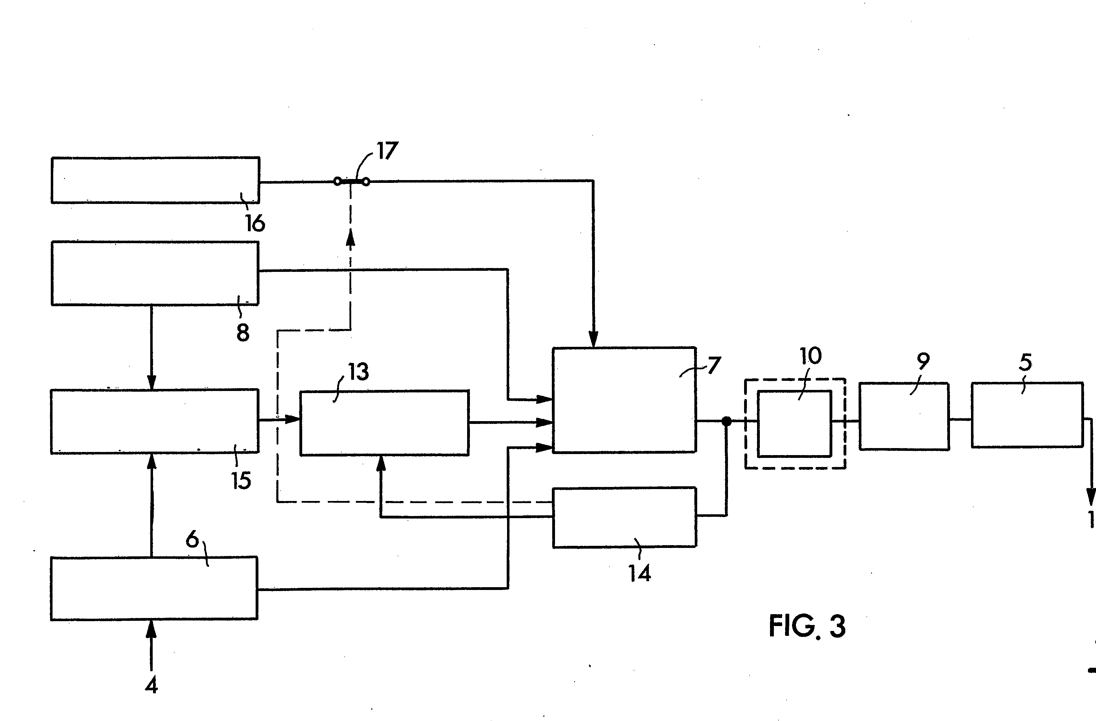

Fig. 3 zeigt eine zweite Ausführungsform der Erfindung, in welcher anstelle des Stillstandsmelders 11 von Fig. 2 ein Nullkomparator 14 verwendet wird. Weiter sind der Istwertbildner 6 und der Sollwertbildner 8 einerseits jeweils wieder mit einem Eingang des Subtrahierers 7, andererseits aber jeweils mit einem Eingang eines Differenzbildners 15 verbunden. Der Ausgang des Differenzbildners ist mit dem Tastspeicher 13 verbunden, dessen Korrektursignalausgang wiederum mit dem dritten Eingang des Subtrahierers 7 verbunden ist. Der Nullkomparator 14 ist zwischen den Ausgang des Subtrahierers und einen weiteren Eingang des Tastspeichers 13 geschaltet. Schließlich ist mit einem vierten Eingang des Subtrahierers 7 eine Hilfssignalschaltung 16 verbunden, deren Funktion im folgenden noch näher erläutert ist.

Während in dem System von Fig. 2 der Stillstand des Antriebs abgewartet und dann die am Subtrahiererausgang vorhandene Spannung gemessen und gespeichert wurde, wird in der Ausführungsform von Fig. 3 in dem Augenblick, in welchem das Ausgangssignal des Subtrahierers 7 null ist, was durch den Nullkomparator 14 festgestellt wird, durch letzteren der Tastspeicher 13 angesteuert, der dann die in
dem Differenzbildner 15 gebildete Differenz zwischen Sollwert und Istwert erfasst und speichert. Nach erfolgter Abspeicherung des Wertes wird die Hilfsspannung über einen
Schalter 17 unterbrochen. Der gespeicherte Wert wird dann
mit dem geeigneten Vorzeichen in Form eines Korrektursignals
zur Kompensation der bleibenden Regelabweichung an den Subtrahierer 7 abgegeben, was zur Folge hat, dass der Schlitten
auf den genauen Lagewert S (Fig.4) eingestellt wird. Es ist
in der Ausführungsform des Regelsystems von Fig. 3 somit nicht
erforderlich, zu warten, bis der Stellantrieb zum Stillstand
gekommen ist, um dann die bleibende Regelabweichung zu messen.
Dafür muss aber sichergestellt werden, dass der Schlitten den
Punkt T (Fig. 4), in welchem das Ausgangssignal des Subtrahierers
gleich null ist, tatsächlich erreicht. Dafür ist die Hilfssignalschaltung 16 vorgesehen. Diese speist vorzeichenrichtig
ein digitales (oder analoges) Hilfssignal in den Subtrahierer 7 ein, damit der auf der zur Zeitachse parallelen und
durch den Punkt S gehenden Geraden gelegene Punkt T, in welchem die Differenz zwischen Sollwert und Istwert durch null
geht, auch tatsächlich von dem Antrieb durchfahren wird und
durch den Nullkomparator 14 festgestellt werden kann.

In beiden Ausführungsformen, die in den Fig. 2 und 3 gezeigt sind, kann das Korrektursignal nicht nur für einen
Referenzpunkt genau bestimmt und gespeichert werden, sondern es kann auch beliebig oft und nicht nur an einem bestimmten Punkt, sondern überall entlang der Regelstrecke
gemessen werden. Der Regler 9 ist in beiden Fällen im wesentlichen ein P-Regler, dessen bleibende Regelabweichung durch
die Nachkorrektur mit Hilfe des von dem Tastspeicher gelieferten
Korrektursignals sehr genau beseitigt wird. Dadurch werden
Stabilitäts- oder Unruheprobleme vermieden, die sich bei der
Verwendung eines Integrierers ergeben würden. In dem beschriebenen System werden der Sollwert und der Istwert digital

0044967

aufbereitet, weshalb, wie dargelegt, zusätzlich der D/A-
Wandler 10 zu verwenden ist, wenn der Regler 9 análog arbeitet.

Der Betrag des Korrektursignals stellt auch ein Mass für
die gute Funktion des Stellantriebs dar. Er kann bei Ueberschreiten einer gewissen Toleranz (z.B. bei nicht ordnungsgemäss funktionierenden Servoventilen) herangezogen werden,
um einen Alarm zu geben oder die mit dem Stellzylinderantrieb
ausgerüstete Maschine abzuschalten.

1980-07-23
Hkl/dk

Maag-Zahnräder & -Maschinen Aktiengesellschaft, 8023 Zürich

0044967

---

Lageregelverfahren und -system für einen Stellzylinderantrieb

---

P a t e n t a n s p r ü c h e :

1.      Lageregelverfahren für einen Stellzylinderantrieb,
bei dem zur Kompensation der bleibenden Regelabweichung
aus einem am Ausgang eines im Regelkreis für den Soll-
Istwert-Vergleich vorgesehenen Subtrahierers abgenommenen
Signal ein Korrektursignal gebildet und vorzeichenrichtig
an geeigneter Stelle dem Regelkreis zugeführt wird,  g e -
k e n n z e i c h n e t  durch die folgenden Schritte:
a) Abnehmen des Signals nach dem Regelvorgang bei Stillstand des Stellantriebs,
b) Speichern des abgenommenen Signals,
c) Abgeben des gespeicherten Signals als Korrektursignal an den Subtrahierer und
d) Nachstellen des Stellantriebszylinders entsprechend
   dem Korrektursignal.

2.      Lageregelverfahren für einen Stellzylinderantrieb, bei
dem zur Kompensation der bleibenden Regelabweichung aus
einem am Ausgang eines im Regelkreis für den Soll-Istwert-

- 2 -  0044967

Vergleich vorgesehenen Subtrahierers abgenommenen Signal
ein Korrektursignal gebildet und vorzeichenrichtig an geeigneter Stelle dem Regelkreis zugeführt wird, gekennzeichnet durch folgende Schritte:

a) Abnehmen des Signals während des Regelvorgangs, wenn
   das Ausgangssignal des Subtrahierers durch null geht,

b) Speichern der in diesem Zeitpunkt vorhandenen Soll-Istwert-Differenz und

c) Abgeben der korrigierten Soll-Istwert-Differenz als
   Korrektursignal an den Subtrahierer.


3. Verfahren nach Anspruch 2, dadurch gekennzeichnet,
daß an den Subtrahierer ein Hilfssignal abgegeben wird,
um sicherzustellen, daß der Stellantrieb die Stelle durchfährt, an der das Ausgangssignal des Subtrahierers durch
null geht.


4. Lageregelsystem zur Durchführung des Verfahrens nach
Anspruch 1, mit einem Sollwert- und einem Istwertbildner,
deren Ausgänge mit zwei Eingängen des die Soll-Istwert-
Differenz bildenden Subtrahierers verbunden sind, mit einem dem Subtrahierer nachgeschalteten Regler, mit einem
diesem nachgeschalteten Servoventil, das auf den in der
Regelstrecke enthaltenen Stellzylinderantrieb einwirkt,
welcher einen Schlitten od.dgl. positioniert, dessen Lage
gegenüber einem feststehenden Teil durch ein hochauflösendes Meßsystem erfaßt wird, welches mit dem Istwertbildner
verbunden ist, und mit einer Kompensationseinrichtung zur
Bildung des Korrektursignals, gekennzeichnet durch einen
Stillstandsmelder (11), der einerseits mit dem Istwertbildner (6) und andererseits mit einem Schalter (12) verbunden ist, welcher durch den Stillstandsmelder schließbar ist und in einer Verbindungsleitung zwischen dem Ausgang des Subtrahierers (7) und einem Eingang eines Tastspeichers (13) liegt, der über einen weiteren Eingang mit
dem Stillstandsmelder und über seinen Ausgang mit einem dritten Eingang des Subtrahierers verbunden ist.

5. Lageregelsystem zur Durchführung des Verfahrens nach Anspruch 2, mit einem Sollwert- und einem Istwertbildner, deren Ausgänge mit zwei Eingängen des die Soll-Istwert-Differenz bildenden Subtrahierers verbunden sind, mit einem dem Subtrahierer nachgeschalteten Regler, mit einem diesem nachgeschalteten Servoventil, das auf den in der Regelstrecke enthaltenen Stellzylinderantrieb einwirkt, welcher einen Schlitten od.dgl. positioniert, dessen Lage gegenüber einem feststehenden Teil durch ein hochauflösendes Meßsystem erfaßt wird, welches mit dem Istwertbildner verbunden ist, und mit einer Kompensationseinrichtung zur Bildung des Korrektursignals, gekennzeichnet durch einen mit dem Ausgang des Subtrahierers (7) verbundenen Nullkomparator (14), durch einen mit dem Sollwertbildner (8) und dem Istwertbildner (6) verbundenen Differenzbildner (15) und durch einen Tastspeicher (13), dessen Eingänge mit dem Ausgang des Differenzbildners bzw. des Tastspeichers verbunden sind und dessen Ausgang mit einem dritten Eingang des Subtrahierers verbunden ist.

6. System nach Anspruch 5, gekennzeichnet durch eine Hilfssignalschaltung (16), die mit einem vierten Eingang des Subtrahierers (7) verbunden ist.

7. System nach einem der Ansprüche 4 bis 6, gekennzeichnet durch einen dem Regler (9) vorgeschalteten D/A-Wandler (10).

FIG. 1

FIG. 2

2/4 0044967

FIG. 3

FIG. 4